Europäisches Patentamt

(19) European Patent Office

Office européen des brevets

(11) Publication number: **0 006 175**
**B1**

(12) **EUROPEAN PATENT SPECIFICATION**

(45) Date of publication of patent specification: **11.08.82**

(51) Int. Cl.³: **A 47 J 31/40**

(21) Application number: **79101760.1**

(22) Date of filing: **05.06.79**

(54) **Coffee machine which brews coffee beverages from pods of ground coffee.**

(30) Priority: **08.06.78 IT 2432278**
**08.06.78 IT 2207278 U**

(43) Date of publication of application:
**09.01.80 Bulletin 80/1**

(45) Publication of the grant of the patent:
**11.08.82 Bulletin 82/32**

(84) Designated Contracting States:
**AT BE CH DE FR GB LU NL SE**

(56) References cited:
**US - A - 3 209 676**
**US - A - 3 213 777**
**US - A - 3 353 474**
**US - A - 3 384 004**

(73) Proprietor: **ILLYCAFFE S.p.A.**
**Via Flavia, 110**
**I-34147 Trieste (IT)**

(72) Inventor: **Illy, Ernesto**
**Via V. Locchi, 8**
**I-34123 Trieste (IT)**

(74) Representative: **Ferraiolo, Ruggero**
**Viale Tunisia, 29**
**I-20124 Milano (IT)**

Courier Press, Leamington Spa, England.

## Coffee machine which brews coffee beverages from pods of ground coffee

This invention relates to improvements in the coffee machines which brew coffee beverages from pods of ground coffee.

In the known machines for brewing coffee beverages by passing hot water through ground coffee pods or cartridges (in the following referred to as "pod" only) certain characteristics are not specified; the relationship between the shape of the pod and the shape of the chamber wherein the pod is housed in order to extract the coffee beverage (in the following such chamber is referred to as "extraction chamber"); the location and other characteristics of the means which are generally comprised in the extraction chamber, such as a baffle member and a filter; the thickness, grinding rate (granulometry), coffee quantity, manufacturing pressure and diameter of the pod itself; the relationship between the characteristics of the pod and the characteristics of the means comprised in the extraction chamber, in particular of the filter. In U.S. Patents No. 3.327.613 and No. 3.370.523 are disclosed other parts of machines which brew coffee beverage from pods: the devices for moving pod carrying tapes through the machine, for actuating certain arms which form the extraction chamber and the ducts for feeding hot water and delivering the coffee beverage, the devices for pressing and heating water, and other features not concerned with the ones listed above. U.S. Patent No. 3.353.474 discloses a dispenser adapted to provide both fresh-brewed beverages and instant beverages comprising in combination: a water heating tank having a cold water inlet and an overflow hot water outlet; a thermostatically controlled electrical water-heating element in said tank; a tubular heat exchanger positioned in said tank; a mixing-dispensing chamber having an outlet adapted to discharge liquid into a drinking vessel; a fresh-brewing chamber having a hot water inlet and a brewed beverage outlet and adapted to be opened and closed for insertion and removal of water-permeable bags of beverage base and other dispensing, delivering and controlling means to provide two different modes of operation.

The applicant realizes that, in the known machines which brew coffee beverages from pods, the characteristics of the extraction chambers, of the pods and the relationship between pods and extraction chambers are determined empirically. The consequence of this fact is that, even if the mechanical working of said machines is good, the taste and healthiness of the extracted coffee beverage vary in unsatisfactory manner.

It is known that the quality of a coffee beverage as extracted from any type of coffee machine depends upon the proper extracted fraction of a number of substances contained in the coffee. In turn, the extracted fraction depends on the time required for the water passing through the pad or layer of ground coffee, namely on the velocity of the water through the pad of ground coffee which, in the following, will be referred to as pad only. As to the filter and the pad, it will be appreciated that both of them exert a resistance against water passing through; the filter resistance depends on its shape and overall area of the holes; the resistance of the pad mainly depends upon the thickness and porosity of the pad itself. But, for brewing a good coffee beverage, it is not possible to select the suitable filter if one does not know the resistance of the pad associated with a certain filter.

The invention as claimed is intended at least to remedy these drawbacks. The invented improvements in the coffee machines comprise a specified extraction chamber, a specified baffle member and a filter of a specific set of filters as well as a specified pod; the relationship between the pod and the filter in the coffee machine is a specific one.

One of the characteristics of the extraction chamber is that the baffle carrying member and the filter associated therewith are so shaped that they tightly clamp the periphery of the pod so that all the hot water coming from the baffle member shall pass through the pod and there will be no hot water passing through the part adjacent to the pod. Moreover, the baffle member and said filter are so shaped that the upper and lower surfaces of the pod are so spaced from the baffle member and said filter, respectively, that the pod is allowed to expand freely within the extraction chamber when, soaked with hot water, it swells.

Particularly, the invented coffee machine comprises an assembly consisting of an extraction chamber, a standard pad and a filter housed in the extraction chamber such that this assembly takes the maximum advantage of the pad contents and causes a range of water velocities through the pad and the associated filter suitable for extracting from the coffee the proper quantity of aromatic substances and for dispensing coffee beverages having the taste of a specific "standard" of drinkers. It will be appreciated that, if one wants to brew coffee beverages of different tastes, according to different "standards" of drinkers, then the characteristics of the pad will be kept constant and different filters of a set of specific filters will be associated with that pad, from one brew to the next, or preferably from one country to another.

The overall resistance of said assembly will vary according to the filter associated with the pad and the velocity of the water through the pad will vary together with the dilution of the aromatic substances, whereas the fraction of the aromatic substances as extracted from the coffee will be constant.

The machine concerned with this invention works at a water pressure equal with the water pressure of the usual known machines for brewing "express" coffee, generally over 6 Atm.

The pad of constant characteristics as mentioned above, namely constant in coffee contents, coffee quality, compaction, granulometry and humidity content, is made as a pod of a shape which fits the extraction chamber and the filter associated therewith. The pod according to the invention consists of a quantity of ground coffee pressed into an envelope of water permeable material and has the following characteristics;

— ground coffee contents: 5—10 g,
— grinding: fine for "express" coffee i.e. at least 75% of the coffee particles have a diameter smaller than 0.4 mm and 20—55% of the coffee particles have a diameter smaller than 0.1 mm,
— manufacturing pressure: not lower than 15 Atm,
— thickness: 5—13 mm; diameter: 35—50 mm.

A first example of a filter according to the invention is one that, when associated with above pod, supplies an "express" coffee beverage suitable for the average Italian taste and has the following characteristics:

— diameter of the surface which carries the holes: 30—35 mm,
— number of holes per sq.cm: 36,
— diameter of the holes: 0.20—0.35 mm,
— thickness: not less than 0.6 mm.

In the unit consisting of the above specified pod and filter the hot water passes through the pod and filter in 20—40 seconds and extracts 22% to 26% of aromatic substances in a beverage volume of 30—50 cu.cm.

A second example of a filter according to the invention has the following features:

— diameter of the surface which carries the plurality of holes: 35—40 mm,
— number of holes per sq.cm: 36,
— diameter of a single hole: 0.20—0.35 mm,
— thickness of the hole carrying plate: 0.6 mm.

In the above unit, the hot water takes from 20 to 40 seconds for passing through the pod and the filter; in this time the fraction of extracted aromatic substances ranges from 22% to 26% in a volume of beverage from 50 to 120 cu.cm. A beverage of such characteristics suits the average north American taste.

The advantage of the invented improvements is that coffee beverages of required and constant taste are brewed and that the fraction of the extracted aromatic substances is within a range which is optimum from the point of view of the healthiness and of the taste, irrespective of the volume.

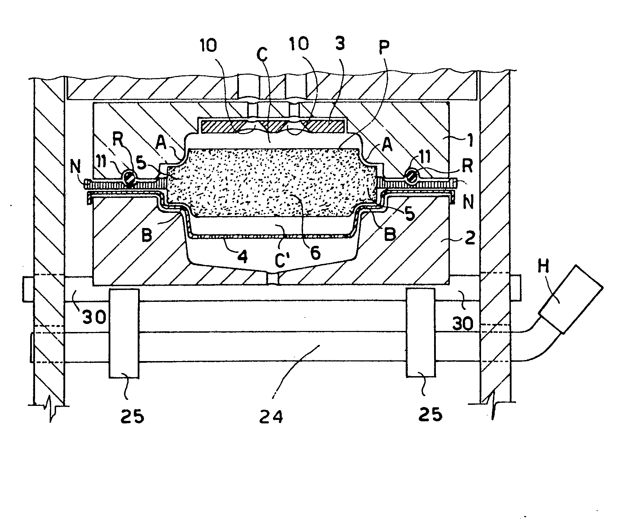

One way of carrying out the invention is described in detail herebelow with reference to the sole figure which illustrates only a specific embodiment by a vertical section taken through an assembly comprising said second example of filter. The assembly consists of a pod P, a baffle carrying member 1 and a filter 4 housed in the filter carrying box 2, the pod P being held between number 1 and filter 4. The baffle carrying member 1 and the filter 4 are so shaped that the relevant parts A and B press the periphery 5 of the pod P so that all the pressurised water, coming from the apertures 10 of the baffle 3, passes through the pod P in the central part 6 thereof since in the periphery 5 the ground coffee is more pressed and exerts a higher resistance against water penetration.

The Figure shows clearly that the distance of the upper surface of the pod P from the baffle 3 and the distance of the lower surface of the pod P from the filter 4 are such that two chambers C and C' are available for the pod P to expand into when soaked with hot water.

It will be appreciated that proper known means will be used for clamping the filter carrying box 2 to baffle carrying member 1. A possible clamping device is shown merely for completeness of the drawing, the device consisting of a handle H by which the two cams 25 on the bar 24 are rotated to push up the bar 30 fixed to the filter carrying member 2. The drawing shows also that a circular groove 11 is engraved in the baffle carrying member 1 for housing an elastic sealing ring R which assures the complete water seal between member 1 and filter 4 wherebetween the part N of the pod P is pressed.

Also it will be appreciated that filters different from those specified above may be used such that, if associated with the pod specified above, it is possible to brew, in the specified time period, coffee beverages containing the above specified fraction of aromatic substances, but in beverage volumes differents from those specified above.

## Claim

Coffee machine for brewing coffee from a pod (P) of ground coffee received in an extraction chamber defined by an upper cap element (1) provided with an upper inlet for causing hot water to pass through the pod (P) and by a lower element (2) which houses a filter (4) and is provided with a lower outlet for causing the coffee to run off, the machine comprising also a water source, a water heater, means for measuring and delivering the hot water to the extraction chamber and operating means, characterized in that the extraction chamber comprises a baffle carrying member (1) and the filter (4) between which the periphery (5) of the pod (P) is clamped in use; in that the baffle (3) and the filter (4) are so spaced from the pod (P) as to define an upper chamber (C) and a lower chamber (C') wherein the pod (P) expands when it is water soaked; in that the pod (P) contains from 5 to 10 grams of ground coffee wherein at least 75% of the coffee particles are of a diameter smaller than 0.4 mm and from 20% to 55% of the coffee particles are of a diameter smaller than 0.1 mm, the pod (P) being pressed, when manufactured, at a pressure not lower than 15 Atm, and having a thickness from 5 to 13 mm and a diameter ranging from 35 to 50 mm; in that the filter (4) is one of a set of filters which comprises a first group of filters where the area comprising the holes is of 30 to 35 mm in diameter and a second group of filters where the area comprising the holes is of 35 to 40 mm in diameter, the diameter of a single hole in the filters varying from 0.20 to 0.35 mm, the quantity of holes being 36 holes per sq. cm. and the thickness being not less than 0.6 mm so that the association of said filters with said pod causes the brewing of a coffee beverage containing a fraction of aromatic substances ranging from 22% to 26% of the total extractable quantity in a time period from 20 to 40 seconds and in a beverage volume ranging from 30 to 50 cu.cm. or from 50 to 120 cu.cm. according to whether a filter of the first or the second group of filters is used.

## Patentanspruch

Kaffeemaschine zur Zubereitung von Kaffee unter Benützung eines Ziegels (P) aus gemahlenem Kaffee, der in einer Extraktionskammer aufgenommen ist, die einen Oberteil (1) mit einer oberen Einlaßöffnung, durch welche heißes Wasser durch den Ziegel (P) leitbar ist, und einen Unterteil (2), der einen Filter (4) aufnimmt und eine untere Auslaßöffnung aufweist, durch die der Kaffee austritt, umfaßt, wobei die Maschine auch mit einem Wasserspender, einer Vorrichtung zum Erhitzen des Wassers, Einrichtungen zur Dosierung und Zuführung des heißen Wassers zur Extraktionskammer und Bedienungselementen ausgestattet ist, dadurch gekennzeichnet, daß die Extraktionskammer einen eine Verteilscheibe tragenden Oberteil (1) sowie den Filter (4) umfaßt, zwischen denen der Rand (5) des Kaffeeziegels (P) festklemmbar ist, daß Verteilscheibe (3) und Filter (4) mit Abstand zum Kaffeeziegel (P) angeordnet sind und eine obere (C) und eine untere Kammer (C') bilden, in der der Kaffeeziegel (P) aufquillt, sobald das Wasser durchläuft, daß weiters der Kaffeeziegel (P) 5 bis 10 Gramm Mahlkaffee enthält, wobei zumindest 75% der Kaffeepartikeln einen Durchmesser von weniger als 0,4 mm haben und 20 bis 55% der Kaffeepartikeln kleiner als 0,1 mm sind, und der Kaffeeziegel (P) bei der Herstellung unter einem Druck von mindestens 15 at gepreßt wird und eine Stärke von 5 bis 13 mm und einen Druchmesser von 35 bis 50 mm aufweist; daß außerdem der Filter (4) aus einem Filtersatz stammt, welcher aus einer ersten Filtergruppe mit einer gelochten Fläche von 30 bis 35 mm Durchmesser und einer zweiten Filtergruppe mit einer gelochten Fläche von 35 bis 40 mm Durchmesser besteht, wobei der einzelne Lochdurchmesser in den Filtern zwischen 0,20 und 0,35 mm variiert, bei 36 Löchern pro $cm^2$ und einer Filterdicke von mindestens 0,6 mm, was bei Verwendung des oben erwähnten Kaffeeziegels bewirkt, daß die Zubereitung des trinkfertigen Kaffees, der einen Anteil an Aromastoffen von 22 bis 26% der extrahierbaren Gesamtmenge aufweist, in einer Zeitspanne von 20 bis 40 Sekunden erfolgt, wobei das Getränkevolumen 30 bis 50 ccm bzw. 50 bis 120 cmm beträgt, je nachdem, ob ein Filter der ersten oder der zweiten Gruppe verwendet wird.

## Revendication

Machine à café pour faire infuser du café en partant d'un gâteau (P) de cafe moulu logé dans une chambre d'extraction définie par un élément supérieur (1) en chapeau muni d'une entrée supérieure pour faire passer de l'eau chaude à travers le gâteau (P) et par un élément inférieur (2) qui loge un filtre (4) et est muni d'une sortie inférieure pour causer l'écoulement du café, la machine comprenant aussi une source d'eau, un chauffeeau, des moyens servant à mesurer l'eau chaude et à l'amener à la chambre d'extraction et des moyens d'actionnement, caractérisée par le fait que la chambre d'extraction comprend un élément porte-déflecteur (1) et le filtre (4) entre lesquels la périphérie (5) du gâteau (P) est enserrée en service, que le déflecteur (3) et le filtre (4) sont espacés du gâteau (P) de manière à définir une chambre supérieure (C) et une chambre inférieure (C') dans lesquelles le gâteau (P) se dilate lorsqu'il est imprégné d'eau, qu le gâteau (P) contient 5 à 10 g de café moulu dans lequel au moins 75% des particules de café sont d'un diamètre inférieur à 0,4 mm et 20 à 55% des particules de café sont d'un diamètre inférieur à 0,1 mm, le gâteau (P) étant comprimé, lors de sa fabrication, à une pression d'au moins 15 atmosphères et ayant une épaisseur de 5 à 13 mm et un diamètre variant de 35 à 50 mm, que le filtre (4) est l'un d'un jeu de filtres qui comprend un premier groupe de filtres où la région présentant les trous a un diamètre de 30 à 35 mm et un deuxième groupe de filtres où la région présentant les trous a un diamètre de 35 à 40 mm, le diamètre individuel de trou dans les filtres variant de 0,20 à 0,35 mm, la quantité de trous étant de 36 trous par $cm^2$ et l'épaisseur n'étant pas inférieure à 0,6 mm, de sorte que l'association des filtres avec le gâteau a pour effet de faire infuser une boisson de café contenant une fraction de substances aromatiques qui va de 22 à 26% de la quantité extractible totale en un laps de temps de 20 à 40 secondes et en un volume de boisson variant de 30 à 50 cm³ ou de 50 à 120 cm³ selon que l'on utilise un filtre du premier ou du deuxième groupe de filtres.